# EUROPÄISCHE PATENTSCHRIFT

(11) **EP 1 375 214 B1**
(45) Veröffentlichungstag und Bekanntmachung des Hinweises auf die Patenterteilung: **17.11.2004**
(21) Anmeldenummer: 03004585.0
(22) Anmeldetag: 28.02.2003
(51) Int. Cl.: B60H 1/22, B60H 1/00, G05D 23/24

(54) **Verfahren zur Ansteuerung eines Heizgerätes, Heizgerät mit einer zur Durchführung dieses Verfahrens ausgebildeten Ansteuervorrichtung, und Verfahren zum Ermitteln eines Wertes**
Heating device controlling method, heating device with controlling means designed for carrying out this method, and method for determining one value
Procédé de commande d'un chauffage, chauffage adapté pour la mise en oeuvre de ce procédé, et procédé pour déterminer une valeur

(30) Priorität: 18.06.2002 DE 10227163
(43) Veröffentlichungstag der Anmeldung: 02.01.2004
(73) Patentinhaber: J. Eberspächer GmbH Co. KG, 73730 Esslingen (DE)
(72) Erfinder: Schmidt, Oliver, 73207 Plochingen (DE)

(56) Entgegenhaltungen:
- EP-A- 1 201 890
- DE-A- 10 002 217
- US-A- 5 412 590
- US-A- 5 764 542
- US-A- 5 931 008

## Beschreibung

Die vorliegende Erfindung betrifft ein Verfahren zur Ansteuerung eines Heizgerätes, eine Heizeinrichtung mit einer zur Durchführung dieses Verfahrens ausgebildeten Ansteuervorrichtung, und ein Verfahren zum Ermitteln eines Istwertes.

Bei der Ansteuerung von Heizgeräten, die beispielsweise als Standheizung in einem Kraftfahrzeug eingesetzt werden, ist es bekannt, als Regelgrößen einerseits einen beispielsweise durch einen Fahrer vorgegebenen Temperatur-Sollwert und andererseits einen Temperatur-lstwert heranzuziehen, welcher beispielsweise beruhend auf der im Fahrzeuginnenraum tatsächlich vorhandenen Temperatur bestimmt wird oder welcher beispielsweise beruhend auf der Temperatur der von außen in das Heizgerät eingeleiteten Luft bestimmt wird. Beruhend auf diesem Sollwert und diesem Istwert wird dann die Heizleistung des Heizgeräts, welches im Allgemeinen als Verbrennungsheizgerät ausgebildet ist, eingestellt, wobei als wesentliche Größe hier beispielsweise die Differenz zwischen dem Istwert und dem Sollwert herangezogen wird. Erreicht diese Differenz einen bestimmten Grenzwert, kann die Heizleistung verändert werden. Um hier eine sehr genaue Abstufung der Heizleistung und somit auch eine sehr genaue Temperaturregelung erlangen zu können, kann es vorgesehen sein, eine Mehrzahl sehr nahe beieinander liegender Grenzwerte bereitzustellen.

Eine derartige Heizeinrichtung ist beispielsweise aus DE 100 02 217 A bekannt.

Die Messsignale, welche von Temperatursensoren geliefert werden, unterliegen häufig großen Schwankungen, einerseits bedingt durch tatsächliche Temperaturänderungen und andererseits bedingt durch die Erfassungsungenauigkeit dieser Sensoren. Diese Schwankungen können zum Vermeiden zu häufiger Veränderungen der Heizleistung, welche an sich nicht erforderlich wären, gemittelt werden, beispielsweise durch Berechnung des arithmetischen Mittels der letzten 30 Mess- bzw. Erfassungswerte.

Ein derartiger Verfahren ist zum Beispiel aus US-A-5 764 542 bekannt.

Es ist die Aufgabe der vorliegenden Erfindung, ein Verfahren zur Ansteuerung eines Heizgerätes, eine Heizeinrichtung mit einer zur Durchführung dieses Verfahrens ausgebildeten Ansteuervorrichtung, und ein Verfahren zum Ermitteln eines Istwertes vorzusehen, bei welchen das Auftreten von Regelschwankungen, bedingt durch Istwertschwankungen, weitestgehend unterbunden werden kann.

Gemäß einem ersten Aspekt der vorliegenden Erfindung wird diese Aufgabe gelöst durch ein Verfahren zur Ansteuerung eines Heizgerätes, insbesondere Fahrzeugheizgerät, beruhend auf einem eine Temperatur eines zu erwärmenden Mediums charakterisierenden Istwert, umfassend die Schritte:
a) Erhalten eines mit der Temperatur des zu erwärmenden Mediums in Zusammenhang stehenden Messwertes,
b) Vergleichen des Messwertes mit einem Istwert,
c) dann, wenn der Messwert einen vorbestimmten Unterschied zum Istwert aufweist, Verändern eines Zählwertes um einen Zählwert-Veränderungsbetrag,
d) dann, wenn der Zählwert einen vorbestimmten Referenzzählwert erreicht, Verändern des Istwertes um einen Istwert-Veränderungsbetrag,
e) Ansteuern des Heizgerätes beruhend auf dem gegebenenfalls im Schritt d) veränderten Istwert,
f) wiederholtes Durchführen der Schritte a) - e).

Wesentlich bei der vorliegenden Erfindung ist, dass der beruhend auf einer Mehrzahl von Mess- bzw. Erfassungswerten bestimmte Istwert nicht durch Bilden eines mathematischen Mittelwertes bestimmt wird, sondern dass jeder Messwert mit dem zum Zeitpunkt seiner Erfassung bereits vorliegenden Istwert verglichen wird und dieses Vergleichsergebnis dann dazu herangezogen wird, zu entscheiden, ob bei den Messwerten eine bestimmte Tendenz beispielsweise in Richtung zu höheren Temperaturen vorliegt. Wenn ja, wird eine entsprechende Anpassung des Istwertes durch Verändern desselben um den lstwert-Veränderungsbetrag vorgenommen. Es hat sich gezeigt, dass dadurch durch sehr kurzfristige Messwertschwankungen induzierte Istwertschwankungen weitestgehend vermieden werden können, was vor allem in Verbindung mit der Ansteuerung eines Heizgerätes, welches ansteuerungstechnisch bzw. in der durch Ansteuerungsveränderung induzierten Wirkung desselben ein sehr träges System darstellt, von besonderem Vorteil ist.

Es sei in diesem Zusammenhang darauf hingewiesen, dass der im vorliegenden Text verwendete Ausdruck Messwert jedwede Größe repräsentiert, die im Zusammenhang steht mit einem zu überwachenden bzw. zu charakterisierenden Parameter, wie z.B. der Temperatur in einem Fahrzeuginnenraum. Ein derartiger Messwert kann also beispielsweise gebildet oder repräsentiert sein direkt durch ein von einem Sensor geliefertes Signal, beispielsweise durch dessen Amplitude oder Frequenz, kann selbstverständlich aber auch repräsentiert sein durch einen Wert oder eine Größe, die durch Signalverarbeitung gewonnen und dann zur erfindungsgemäßen Vorgehensweise herangezogen wird.

Bei dem erfindungsgemäßen Verfahren kann vorgesehen sein, dass die Schritte a) - e) zum Erhalt einer Abfolge von Messwerten gemäß dem Schritt f) jeweils nach einer vorbestimmten Zeitdauer seit dem Ablauf der vorangehenden Durchführung wiederholt werden.

Ein wesentlicher Einfluss hinsichtlich der Vermeidung unnötiger Regel- bzw. Ansteuerungsschwankungen kann dadurch genommen werden, dass dann, wenn ein Messwert den vorbestimmten Unterschied zum Istwert nicht aufweist, ein in einer vorangehenden Durchführung des Schrittes c) veränderter Zählwert auf einen Ausgangswert zurückgesetzt wird. Daraus folgt, dass nur dann, wenn eine längerfristige Tendenz vorhanden ist, also dann, wenn eine vergleichsweise große Anzahl aufeinander folgender Abfragen die gleiche Tendenz bestätigt, eine Veränderung des Istwertes vorgenommen wird.

Um den Istwert in beiden Richtungen anpassen zu können, wird vorgeschlagen, dass dann, wenn im Schritt c) ein Messwert größer als der Istwert ist, ein erster Zählwert verändert wird, und dann, wenn ein Messwert kleiner als der Istwert ist, ein zweiter Zählwert verändert wird.

Wie bereits vorangehend ausgeführt, ist es zur Bestätigung einer bestimmten Tendenz bei den Messwerten vorteilhaft, wenn im Schritt d) der Istwert dann verändert wird, wenn in wenigstens drei aufeinander folgenden Durchführungen des Schrittes c) der Zählwert jeweils um den Zählwert-Veränderungsbetrag verändert worden ist und den Referenzzählwert erreicht hat.

Gemäß einem weiteren Aspekt der erfindungsgemäßen Vorgehensweise kann vorgesehen sein, dass dann, wenn der erste Zählwert einen ersten Referenzzählwert erreicht, der Istwert um einen ersten Istwert-Veränderungsbetrag erhöht wird, und dann, wenn der zweite Zählwert einen zweiten Referenzzählwert erreicht, der Istwert um einen zweiten Istwert-Veränderungsbetrag verringert wird. Um in beiden Richtungen gleichmäßige lstwertveränderungen bereitstellen zu können, wird vorgeschlagen, dass der erste lstwert-Veränderungsbetrag gleich dem zweiten Istwert-Veränderungsbetrag ist. Ferner ist es in diesem Zusammenhang vorteilhaft, wenn dem ersten Zählwert ein erster Referenzzählwert zugeordnet wird und dem zweiten Zählwert ein zweiter Referenzzählwert zugeordnet wird und der erste Referenzzählwert gleich dem zweiten Referenzzählwert ist.

Um auch bei Beginn der Durchführung des erfindungsgemäßen Verfahrens geeignete Ausgangswerte zur Durchführung der verschiedenen Verfahrensmaßnahmen heranziehen zu können, wird vorgeschlagen, dass bei der ersten Durchführung des Schrittes b) der bei der ersten Durchführung des Schrittes a) erhaltene Messwert als Istwert verwendet wird.

Gemäß einem weiteren Aspekt der vorliegenden Erfindung wird die eingangs genannte Aufgabe gelöst durch eine Heizeinrichtung, insbesondere für ein Fahrzeug, umfassend ein Heizgerät mit einer Wärmetauscheranordnung zur Übertragung von Wärme auf ein zu erwärmendes Medium, eine Ansteuervorrichtung zum Ansteuern des Heizgeräts sowie eine Sensoranordnung zur Erfassung wenigstens einer mit der Temperatur des zu erwärmenden Mediums in Zusammenhang stehenden Größe, wobei die Ansteuervorrichtung das Heizgerät beruhend auf der wenigstens einen Größe unter Durchführung des erfindungsgemäßen Verfahrens ansteuert.

Die vorliegende Erfindung betrifft ferner ein Verfahren zum Ermitteln eines Istwertes aus einer Mehrzahl aufeinander folgend erhaltener Messwerte, umfassend die Schritte:
a) Erhalten eines Messwertes,
b) Vergleichen des im Schritt a) erhaltenen Messwertes mit einem Istwert,
c) dann, wenn der Messwert einen vorbestimmten Unterschied zum Istwert aufweist, Verändern eines Zählwertes um einen Zählwert-Veränderungsbetrag,
d) dann, wenn der Zählwert einen vorbestimmten Referenzzählwert erreicht, Verändern des Istwertes um einen Istwert-Veränderungsbetrag,
e) wiederholtes Durchführen der Schritte a) - d).

Nachfolgend wird mit Bezug auf die beiliegenden Zeichnungen die Erfindung detailliert beschrieben. Es zeigt:
- Fig. 1: eine Prinzipansicht einer Heizeinrichtung, bei welcher die erfindungsgemäße Vorgehensweise durchgeführt werden kann;
- Fig. 2: im Diagramm a) eine Mehrzahl aufeinander folgend erhaltener Messwerte mᵢ sowie den beruhend auf diesen Messwerten bestimmten lstwert l, im Diagramm b) den Verlauf eines ersten Zählwertes A und im Diagramm c) den Verlauf eines zweiten Zählwertes B;
- Fig. 3: der Fig. 2 entsprechende Diagramme a), b), c) für einen anderen Betriebszustand der Heizeinrichtung;
- Fig. 4: ein Zeitdiagramm, in welchem über eine längere Zeitdauer hinweg der Verlauf der Messwerte, des Istwertes sowie der Zählwerte A und B dargestellt ist.

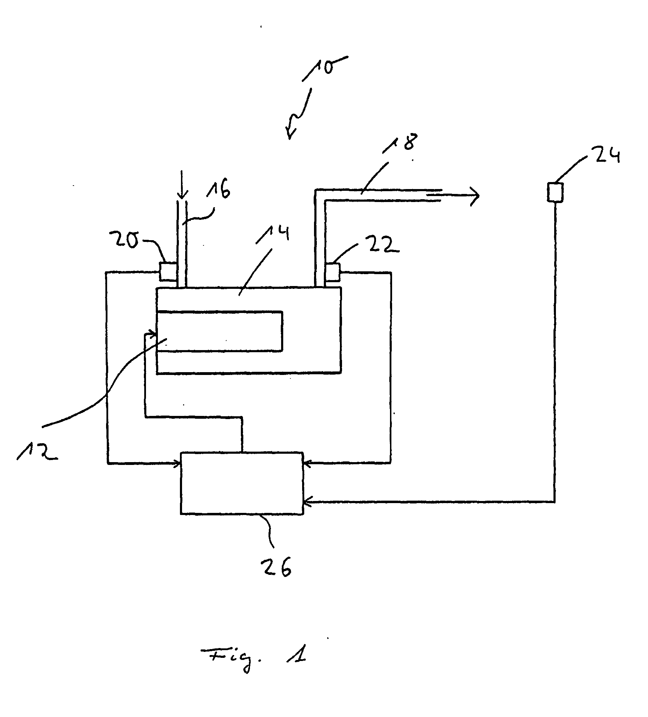

In Fig. 1 ist eine beispielsweise bei einem Kraftfahrzeug einzusetzende Heizeinrichtung allgemein mit 10 bezeichnet. Die Heizeinrichtung 10 umfasst ein beispielsweise durch Brennstoff- und Verbrennungsluftzufuhr betreibbares Heizgerät 12, dessen Wärme in einem Wärmetauscher 14 auf ein zu erwärmendes Medium, beispielsweise die in den Fahrzeuginnenraum einzuleitende Luft, übertragen wird. Diese Luft wird über eine Einlassleitung 16 in den Wärmetauscher 14 geleitet und verlässt diesen über eine Auslassleitung 18 in Richtung Fahrzeuginnenraum. Zur Erfassung der Temperatur der Luft sind verschiedene Sensoren vorgesehen. So kann ein erster Temperatursensor 20 die Temperatur der Luft vor Eintritt in den Wärmetauscher 14 erfassen, während ein zweiter Temperatursensor 22 die Temperatur der Luft nach dem Austritt aus dem Wärmetauscher 14 erfasst. Im Fahrzeuginnenraum kann ein Temperatursensor 24 vorgesehen sein, um auch dort die Temperatur zu erfassen. Beruhend auf zumindest einem der Signale der Sensoren 20, 22, 24, die zu einer Ansteuervorrichtung 26 geleitet werden, und beispielsweise auch beruhend auf einem durch einen Fahrer des Fahrzeugs vorgebbaren oder in der Ansteuervorrichtung 26 erzeugten Temperatursollwert wird das Heizgerät 12 von der Ansteuervorrichtung 26 zur Erlangung einer bestimmten Erwärmung des den Wärmetauscher 14 durchströmenden Mediums angesteuert, um entsprechend die Heizleistung des Heizgeräts 12 zu verändern. Diese Veränderung kann beispielsweise durch Veränderung der Brennstoffzufuhr oder/und durch Veränderung der Verbrennungsluftzufuhr erfolgen. Dabei kann so vorgegangen werden, dass ein wie im Folgenden detailliert beschrieben generierter Istwert mit dem Temperatur-Sollwert verglichen wird und beruhend auf der so gebildeten Differenz Regelmaßnahmen ergriffen werden, also beispielsweise bei größer werdender Differenz die Heizleistung zunehmend erhöht bzw. verringert wird.

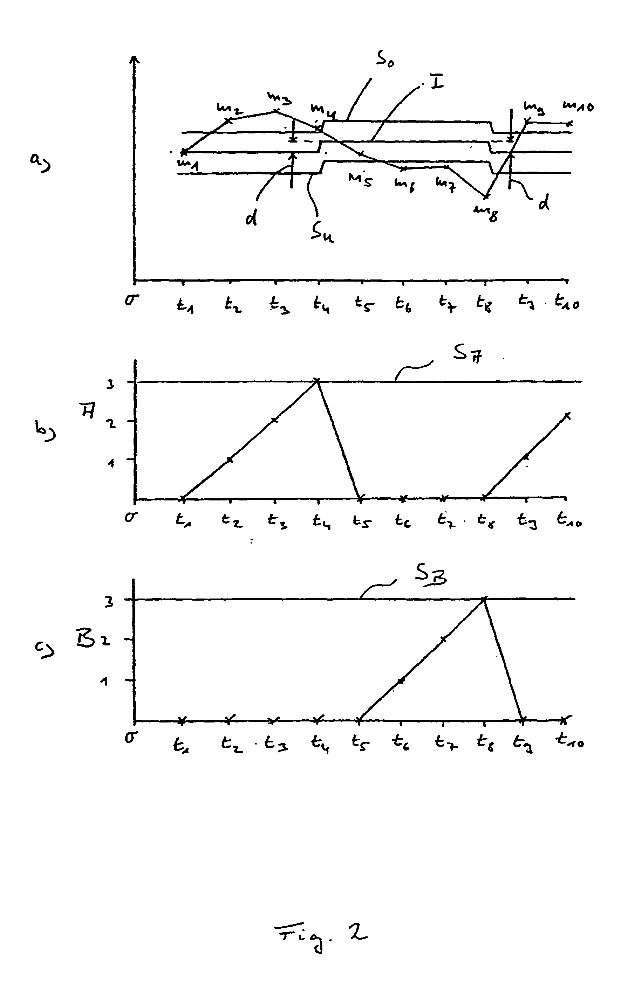

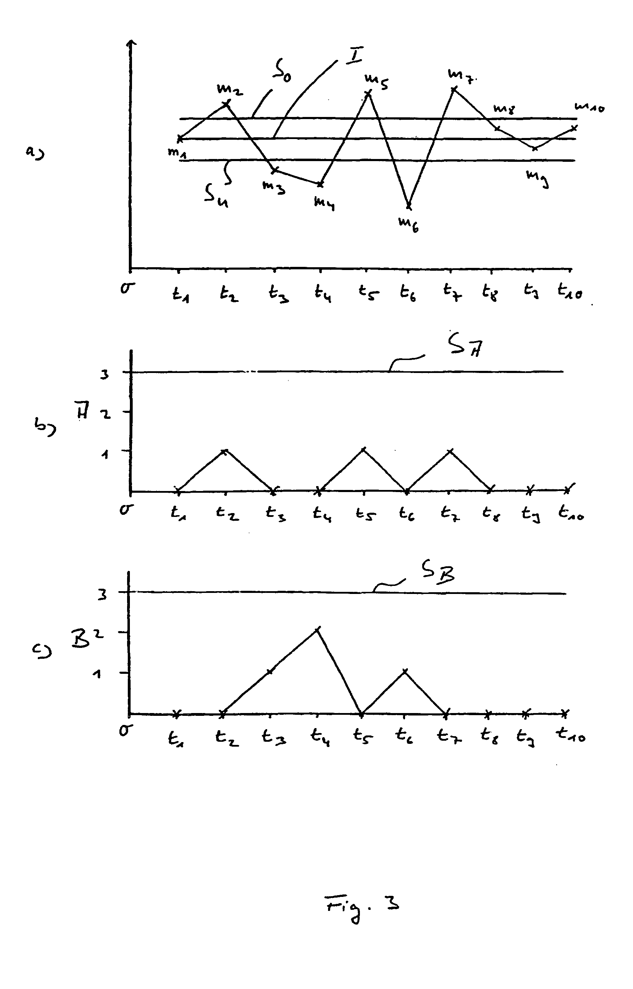

Die Erzeugung des Istwertes beruhend auf der Ausgabe von zumindest einem der Sensoren 20, 22, 24 wird im Folgenden mit Bezug auf die Fig. 2 und 3 prinzipiell beschrieben.

Es wird so vorgegangen, dass beispielsweise zu vorbestimmten Zeitpunkten bzw. Zeitintervallen, also beispielsweise jeweils nach Ablauf einer Sekunde, das Signal von einem der Sensoren 20, 22, 24 oder mehreren dieser Sensoren oder möglicherweise auch ein Differenzsignal aufgenommen wird bzw. als Messwert in die Ansteuervorrichtung 26 eingegeben oder in dieser ein beruhend auf der Signaleingabe generierter Messwert bereitgestellt wird. Dies sei beispielsweise zum Zeitpunkt t₁ der Messwert m₁, welcher im dargestellten Fall auch denjenigen Messwert mᵢ repräsentiert, der als erster Wert beispielsweise am Beginn des Betriebs aufgenommen wird. Dieser Messwert m₁ wird zunächst als Istwert I herangezogen. Zum Zeitpunkt t₂ wird ein zweiter Messwert m₂ erhalten, der, wie man in dem Diagramm a) der Fig. 2 erkennt, deutlich größer ist als der Messwert m₁ und somit auch größer als der zum Zeitpunkt t₂ noch angenommene Istwert I. Insbesondere erkennt man, dass der Messwert m₂ größer ist als ein oberer Schwellenwert Sₒ, der einen vorbestimmten Abstand zum Istwert I aufweist. Vorzugsweise ist dieser vorbestimmte Abstand des Schwellenwertes Sₒ mindestens so groß, wie die Signalauflösung bzw. der Messfehler desjenigen Sensors, dessen Signal verarbeitet wird, also auch derjenige Messfehler oder Fehler, der bei einem jeweiligen Messwert mᵢ vorhanden sein wird. Nach Erhalt des Messwertes m₂ wird dieser mit dem Istwert l, also hier mit dem ersten Messwert m₁ verglichen, und dieser Vergleich zeigt nun an, dass dieser Messwert m₂ um ein Ausmaß größer ist, als der Istwert l, welches über einer durch den Abstand der Schwelle Sₒ zum Istwert l definierten Differenz liegt. Es wird daher ein zunächst noch bei einem Ausgangswert von 0 gehaltener erster Zählwert A gemäß dem Diagramm b) der Fig. 2 um ein vorbestimmtes Inkrement, im vorliegenden Fall den Wert 1, erhöht. Zum Zeitpunkt t₃ wird ein Messwert m₃ erhalten, und dieser Messwert m₃ wird wieder mit dem Istwert l, also immer noch dem am Anfang aufgenommenen Messwert m₁, verglichen. Auch dieser Vergleich zeigt an, dass der Messwert m₃ mehr als einen vorbestimmten Unterschied vom Istwert l entfernt liegt, da er, ebenso wie der Messwert m₂, über der einen vorbestimmten Abstand zum Istwert I aufweisenden oberen Schwelle Sₒ liegt. Es wird daher der Zählwert A erneut um ein Inkrement erhöht, so dass er nunmehr den Wert 2 annimmt. Auch zum Zeitpunkt t₄ ergibt der Vergleich, dass der dort erhaltene Messwert m₄ um mehr als den vorbestimmten Unterschied vom Istwert I entfernt liegt bzw., ebenso wie die Messwerte m₂ und m₃, über der oberen Schwelle Sₒ liegt. Es wird daher der Zählwert A um ein weiteres Inkrement erhöht, so dass er nun den Wert 3 annimmt.

Für diesen Zählwert A ist ebenfalls ein Referenzzählwert S_{A} als Schwelle vorgegeben, welche im vorliegenden Fall auf den Wert 3 gesetzt ist. Zum Zeitpunkt t₄ erreicht der Zählwert A tatsächlich diesen Wert 3. Dies bedeutet also, dass bei drei aufeinander folgenden Messwerten mᵢ diese jeweils über der oberen Schwelle Sₒ gelegen haben, so dass eine klare Tendenz der Messwerte mᵢ erkennbar ist. Es wird daher dann, wenn der Zählwert A seinen Referenzzählwert S_{A}, hier also die Zahl 3, erreicht, der Istwert I der Tendenz der Messwerte mᵢ folgend um einen Istwert-Veränderungsbetrag d erhöht. Dieser Istwert-Veränderungsbetrag ist frei wählbar, kann beispielsweise im Bereich der Größe des Unterschieds zwischen dem Istwert l und der Schwelle Sₒ liegen. Im dargestellten Beispiel ist aus Gründen der deutlicheren Darstellbarkeit der Istwert-Veränderungsbetrag d etwas kleiner, als der Unterschied zwischen der oberen Schwelle Sₒ und dem Istwert I. Zusammen mit dem Istwert l werden auch die obere Schwelle Sₒ und eine untere Schwelle Sᵤ beispielsweise ebenfalls um diesen Istwert-Veränderungsbetrag d in Anpassung an die Tendenz der Messwerte mᵢ verschoben. Ferner wird nach Erreichen des Referenzzählwertes S_{A} der Zähl wert A wieder auf seinen Ausgangswert, also im dargestellten Beispiel den Wert 0, zurückgesetzt.

Im Zeitpunkt t₅ wird ein weiterer Messwert m₅ erhalten, der nunmehr mit dem veränderten Istwert I verglichen wird. Der Vergleich ergibt, dass der Messwert m₅ zwar kleiner ist, als der Istwert I, jedoch einen derartigen Abstand zu diesem aufweist, welcher kleiner ist, als der Abstand der unteren Schwelle Sᵤ zum Istwert I. Es sei hier daraufhingewiesen, dass vorzugsweise die obere Schwelle Sₒ und die untere Schwelle Sᵤ zum istwert I den gleichen Abstand aufweisen. Es wird aufgrund der Tatsache, dass der Messwert m₅ in dem durch die obere Schwelle Sₒ und die untere Schwelle Sᵤ um den Istwert I definierten Intervall liegt, weder der Zählwert A verändert, noch ein im Diagramm c) der Fig. 2 erkennbarer Zählwert B, der bisher immer bei seinem Ausgangswert, also bei dem Wert 0, gehalten worden ist.

Zum Zeitpunkt t₆ wird ein weiterer Messwert m₆ erhalten, der nunmehr unter der unteren Schwelle Sᵤ liegt und somit zum Istwert l einen Abstand aufweist, der größer ist, als ein durch den Abstand der unteren Schwelle Sᵤ zum Istwert l definierter Unterschied. Es wird daher der der Verkleinerung des Istwertes l bzw. der Messwerte mᵢ zugeordnete Zählwert B um ein Inkrement, im dargestellten Beispiel wieder den Betrag 1, erhöht. Auch der nachfolgend erhaltene Messwert m₇ liegt unter der unteren Schwelle Sᵤ, so dass auch zum Zeitpunkt t₇ der Zählwert B erneut um ein Inkrement erhöht wird und nun den Wert 2 annimmt, während der der Vergrößerung des Istwertes I bzw. der Messwerte mᵢ zugeordnete Zählwert A während dieser Phase bei seinem Ausgangswert verbleibt.

Auch der zum Zeitpunkt t₈ zum Vergleich mit dem Istwert I herangezogene Messwert m₈ liegt unter der Schwelle Sᵤ, so dass erneut der Zählwert B um ein Inkrement erhöht wird und nunmehr den Wert 3 erreicht. Auch hier sei angenommen, dass für den Zählwert B ein Referenzzählwert S_{B} auf 3 gesetzt ist, so dass zum Zeitpunkt t₈ nunmehr der Zählwert B seinen Referenzzählwert S_{B} erreicht. Dies zeigt also eine über drei Messschritte hinweg aufgezeichnete Tendenz der deutlichen Verkleinerung der Messwerte m₈ an. Dieser Tendenz folgend wird daher bei Erreichen des Referenzzählwertes S_{B} durch den Zählwert B der Istwert I verringert, und zwar im dargestellten Beispiel wieder um den Istwert-Veränderungsbetrag d. Es liegt dann nach dem Zeitpunkt t₈ wieder wieder ein Istwert I vor, der dem Istwert I vor dem Zeitpunkt t₄ entspricht.

Die Veränderung des Istwertes bei Erhöhung desselben und bei Verringerung desselben ist im dargestellten Beispiel jeweils mit dem gleichen Veränderungsbetrag d realisiert. Es ist möglich, hier verschiedene Veränderungsbeträge in Richtung aufwärts und in Richtung abwärts vorzusehen. Ebenso ist es selbstverständlich möglich, für die beiden Zählwerte A und B verschiedene Referenzzählwerte S_{A} und S_{B} vorzugeben, so dass beispielsweise zur Istwerterhöhung eine länger anhaltende Tendenz vorhanden sein muss, als zur Istwertverringerung, oder umgekehrt.

Der zum Zeitpunkt t₉ vorliegende Messwert m₉ liegt deutlich über dem Messwert m₈ und liegt des Weiteren über der nunmehr in Anpassung an den verringerten Istwert 1 ebenfalls wieder herabgesetzten oberen Schwelle Sₒ. Entsprechendes trifft auch für den Messwert m₁₀ zu, so dass zu den Zeitpunkten t₉ und t₁₀ der Zählwert A jeweils ausgehend vom Ausgangswert 0 um ein Inkrement erhöht wird, während der nach Verringerung des Istwertes l wieder auf seinen Ausgangswert 0 zurückgesetzte Zählwert B bei seinem Ausgangswert verbleibt.

Auch die Fig. 3 stellt verschiedene Situationen der Veränderung der Messwerte mᵢ dar. Hier ist erkennbar, dass ausgehend vom Messwert m₁ der Messwert m₂ wieder höher liegt, und zwar über der oberen Schwelle Sₒ, was, wie vorangehend bereits beschrieben, zur Folge hat, dass der der Erhöhung zugeordnete Zählwert A um ein Inkrement erhöht wird. Die Tatsache, dass tatsächlich eine Erhöhung aufgetreten ist, kann dadurch erkennbar werden, welches Vorzeichen eine zwischen einem jeweiligen Messwert mᵢ und dem Istwert l gebildete Differenz hat. Je nachdem, ob das Vorzeichen positiv oder negativ ist, kann dann der Zählwert A oder der Zählwert B oder ggf. beide Zählwerte verändert werden, wie im Folgenden noch beschrieben, sofern die Differenz ausreichend groß ist.

Der Messwert m₃ liegt deutlich unter dem Messwert m₂ und liegt des Weiteren auch unter der unteren Schwelle Sᵤ. Dies hat zur Folge, dass der der Verringerung zugeordnete Zählwert B nunmehr um ein Inkrement erhöht wird. Der Zählwert A, welcher zuvor noch auf den Wert 1 gesetzt war, wird nunmehr, aufgrund der Tatsache, dass eine Tendenz ansteigender Zählwerte nicht erkennbar ist, wieder auf seinen Ausgangswert zurückgesetzt.

Der Messwert m₄ liegt unter der unteren Schwelle Sᵤ, so dass der Zählwert B um ein weiteres Inkrement erhöht wird. Der Messwert m₅ zeigt nun wieder einen deutlichen Anstieg an und liegt über der oberen Schwelle Sₒ. Es wird daher der der Erhöhung zugeordnete Zählwert A nunmehr zum Zeitpunkt t₅ um ein Inkrement erhöht und auf 1 gesetzt, während der der Tendenz in Richtung Verringerung zugeordnete Zählwert B auf seinen Ausgangswert zurückgesetzt wird. In umgekehrter Art und Weise führt dann der Übergang zum Messwert m₆ zum erneuten Setzen des Zählwertes B auf den Wert 1, während der Zählwert A auf seinen Ausgangswert zurückgesetzt wird. Da der Messwert m₇ wieder über der oberen Schwelle Sₒ liegt, findet erneut ein Wechsel bei den Zählwerten statt, bei welchem der Zählwert A nunmehr wieder ausgehend von seinem Ausgangswert 0 um ein Inkrement erhöht wird, während der Zählwert B auf seinen Ausgangswert O zurückgesetzt wird. Die nachfolgenden Messwerte m₈, m₉ und m₁₀ liegen alle innerhalb des durch die Schwellen Sₒ und Sᵤ definierten Bereichs um den Istwert I. Es wird daher zum Zeitpunkt t₈ der Zählwert A wieder auf seinen Ausgangswert zurückgesetzt und bleibt, ebenso wie der Zählwert B, bei diesem Ausgangswert, da die nachfolgenden Messwerte nicht mehr aus dem angegebenen Bereich herausfallen.

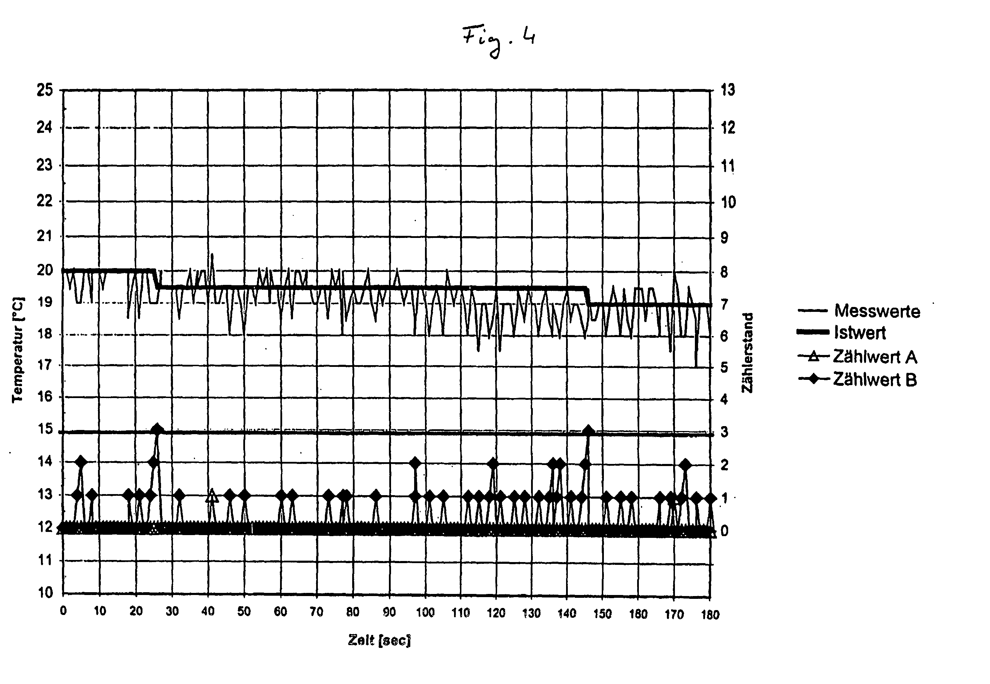

Die Fig. 2 und 3 zeigen deutlich, dass vergleichsweise starke und kurzfristige Messwertschwankungen zu einem sehr glatten Istwertverlauf führen. Der Istwert folgt den kurzfristigen und in Fig. 3 erkennbaren Messwertschwankungen nicht, folgt jedoch mit einiger Verzögerung und in deutlich geglätteter Art und Weise einer langfristigen Messwertveränderung, wie sie in Fig. 2 gezeigt ist. Vor allem in Verbindung mit einem vergleichsweise trägen System, bei welchem durch Heizleistungsveränderung eine Einwirkung auf die Erwärmung eines zu erwärmenden Mediums, wie z.B. Luft, genommen werden soll, ist es von deutlichem Vorteil, einen derartig glatten Verlauf des Istwertes zur Ansteuerung heranziehen zu können, der gleichwohl die durch die verschiedenen Messwerte vorgegebene Tendenz repräsentiert. Dies wird auch deutlich in der Fig. 4, welche zeigt, dass über einen vergleichsweise langen Zeitraum von 180 Sekunden das die verschiedenen Messwerte repräsentierende Messwertesignal deutliche Schwankungen aufweist, während der gemäß dem erfindungsgemäßen Verfahren ermittelte Istwert zwar der allgemein in Richtung geringerer Temperaturen weisenden Tendenz der Messwerte folgt, über das Zeitintervall von 180 Sekunden hinweg jedoch nur zwei an diese Tendenz anpassende Veränderungen erfährt. Das Auftreten von durch Istwertschwankungen induzierten Regel- oder Ansteuerschwankungen kann somit praktisch vollständig ausgeschlossen werden.

Es sei darauf hingewiesen, dass die erfindungsgemäße Vorgehensweise in verschiedenen Aspekten auch anders realisiert werden kann, als vorangehend detailliert beschrieben. So können beispielsweise die verschiedenen Inkremente bzw. Veränderungswerte nach oben oder nach unten jeweils voneinander unabhängig auf verschiedene Beträge gesetzt werden. Auch ist es beispielsweise möglich, dass dann, wenn vor Erreichen eines Referenzzählwertes die Messwerte wieder in den durch die beiden Schwellen definierten Bereich fallen, diesen Bereich also nicht in der anderen Richtung übersteigen, wie z.B. beim Übergang von Messwert m₇ zum Messwert m₈ in Fig. 3 erkennbar, der zugeordnete Zählwert nicht auf seinen Ausgangswert zurückgesetzt wird, sondern nur verringert wird, beispielsweise um ein Inkrement. Dies bedeutet, dass nicht notwendigerweise durch unmittelbar aufeinander folgende Vergleiche ein Referenzzählwert zu erreichen ist, sondern dass beispielsweise auch dann auf eine Tendenz in einer bestimmten Richtung erkannt wird, wenn eine bestimmte Anzahl an Vergleichen auf eine bestimmte Tendenz hinweist, wobei diese Anzahl an Vergleichen unterbrochen sein kann durch einen oder mehrere Vergleiche, die zwar diese Tendenz nicht bestätigen, jedoch nicht eine Tendenz in der anderen Richtung indizieren.

Weiter sei darauf hingewiesen, dass selbstverständlich die erfindungsgemäße Vorgehensweise nicht nur in Verbindung mit einem Heizgerät in einem Fahrzeug eingesetzt werden kann, sondern immer dann, wenn aus einer Mehrzahl aufeinander folgend aufgenommener bzw. erhaltener Messwerte ein in sinnvoller Weise zur Ansteuerung eines Systems verwertbarer Istwert generiert werden soll. Im Zusammenhang mit der vorangehend beschriebenen Ermittlung des Temperaturistwertes, der zur Ansteuerung eines Heizgerätes genutzt werden kann, kann die erfindungsgemäße Vorgehensweise auch zur Ermittlung des Sollwertes, mit welchem dieser Temperaturistwert dann verglichen wird, herangezogen werden. Dieser Temperatursollwert kann beispielsweise durch das Erfassen des Spannungsabfalls an einem durch Drehkopfbetätigung o. dgl. veränderbaren elektrischen Widerstand ermittelt werden, wobei auch hier in bestimmten zeitlichen Abständen wiederholt ein derartiger Spannungswert ermittelt wird und dann zur Durchführung der erfindungsgemäßen Vorgehensweise zur Ermittlung eines hinsichtlich dieser konkreten Größe als Istwert zu betrachtenden Wertes genutzt wird, welcher dann bei der Ansteuerung des Heizgerätes den Sollwert bildet.

## Patentansprüche

1. Verfahren zur Ansteuerung eines Heizgerätes (12), insbesondere Fahrzeugheizgerät, beruhend auf einem eine Temperatur eines zu erwärmenden Mediums charakterisierenden Istwert (l), umfassend die Schritte:
a) Erhalten eines mit der Temperatur des zu erwärmenden Mediums in Zusammenhang stehenden Messwertes (mᵢ).
b) Vergleichen des Messwertes (mᵢ) mit einem Istwert (l),
c) dann, wenn der Messwert (mᵢ) einen vorbestimmten Unterschied zum Istwert (l) aufweist, Verändern eines Zählwertes (A, B) um einen Zählwert-Veränderungsbetrag,
d) dann, wenn der Zählwert (A, B) einen vorbestimmten Referenzzählwert (S_{A}, S_{B}) erreicht, Verändern des Istwertes (l) um einen Istwert-Veränderungsbetrag (d),
e) Ansteuern des Heizgerätes (12) beruhend auf dem gegebenenfalls im Schritt d) veränderten Istwert (l),
f) wiederholtes Durchführen der Schritte a) - e).

2. Verfahren nach Anspruch 1,
**dadurch gekennzeichnet, dass** die Schritte a) - e) zum Erhalt einer Abfolge von Messwerten (mᵢ) gemäß dem Schritt f) jeweils nach einer vorbestimmten Zeitdauer seit dem Ablauf der vorangehenden Durchführung wiederholt werden.

3. Verfahren nach Anspruch 1 oder 2,
**dadurch gekennzeichnet, dass** dann, wenn ein Messwert (mᵢ) den vorbestimmten Unterschied zum Istwert (l) nicht aufweist, ein in einer vorangehenden Durchführung des Schrittes c) veränderter Zählwert (A, B) auf einen Ausgangswert zurückgesetzt wird.

4. Verfahren nach einem der Ansprüche 1 bis 3,
**dadurch gekennzeichnet, dass** dann, wenn im Schritt c) ein Messwert (mᵢ) größer als der Istwert (l) ist, ein erster Zählwert (A) verändert wird, und dann, wenn ein Messwert (mᵢ) kleiner als der Istwert (l) ist, ein zweiter Zählwert (B) verändert wird.

5. Verfahren nach einem der Ansprüche 1 bis 4,
**dadurch gekennzeichnet, dass** im Schritt d) der Istwert (l) verändert wird, wenn in wenigstens drei aufeinander folgenden Durchführungen des Schrittes c) der Zählwert (A, B) jeweils um den Zählwert-Veränderungsbetrag verändert worden ist und den Referenzzählwert (S_{A}, S_{B}) erreicht hat.

6. Verfahren nach Anspruch 4 oder Anspruch 5, sofern auf Anspruch 4 rückbezogen,
**dadurch gekennzeichnet, dass** dann, wenn der erste Zählwert (A) einen ersten Referenzzählwert (S_{A}) erreicht, der Istwert (l) um einen ersten lstwert-Veränderungsbetrag (d) erhöht wird, und dann, wenn der zweite Zählwert (B) einen zweiten Referenzzählwert (S_{B}) erreicht, der Istwert (l) um einen zweiten Istwert-Veränderungsbetrag (d) verringert wird.

7. Verfahren nach Anspruch 6,
**dadurch gekennzeichnet, dass** der erste lstwert-Veränderungsbetrag (d) gleich dem zweiten Istwert-Veränderungsbetrag (d) ist.

8. Verfahren nach Anspruch 4 oder einem der Ansprüche 5 bis 7, sofern auf Anspruch 4 rückbezogen,
**dadurch gekennzeichnet, dass** dem ersten Zählwert (A) ein erster Referenzzählwert (S_{A}) zugeordnet ist und dem zweiten Zählwert (B) ein zweiter Referenzzählwert (S_{B}) zugeordnet ist und dass der erste Referenzzählwert (S_{A}) gleich dem zweiten Referenzzählwert (S_{B}) ist.

9. Verfahren nach einem der Ansprüche 1 bis 8,
**dadurch gekennzeichnet, dass** bei der ersten Durchführung des Schrittes b) der bei der ersten Durchführung des Schrittes a) erhaltene Messwert (m₁) als Istwert (l) verwendet wird.

10. Heizeinrichtung, insbesondere für ein Fahrzeug, umfassend ein Heizgerät (12) mit einer Wärmetauscheranordnung (14) zur Übertragung von Wärme auf ein zu erwärmendes Medium, eine Ansteuervorrichtung (26) zum Ansteuern des Heizgeräts (12) sowie eine Sensoranordnung (20, 22, 24) zur Erfassung wenigstens einer mit der Temperatur des zu erwärmenden Mediums in Zusammenhang stehenden Größe, wobei die Ansteuervorrichtung (26) das Heizgerät (12) beruhend auf der wenigstens einen Größe unter Durchführung eines Verfahrens nach einem der vorangehenden Ansprüche ansteuert.

11. Verfahren zum Ermitteln eines Istwertes (l) aus einer Mehrzahl aufeinander folgend erhaltener Messwerte (mᵢ), umfassend die Schritte:
a) Erhalten eines Messwertes (mᵢ),
b) Vergleichen des im Schritt a) erhaltenen Messwertes (mᵢ) mit einem Istwert (I),
c) dann, wenn der Messwert (mᵢ) einen vorbestimmten Unterschied zum Istwert (l) aufweist, Verändern eines Zählwertes (A, B) um einen Zählwert-Veränderungsbetrag,
d) dann, wenn der Zählwert (A, B) einen vorbestimmten Referenzzählwert (S_{A}, S_{B}) erreicht, Verändern des Istwertes (l) um einen Istwert-Veränderungsbetrag (d),
e) wiederholtes Durchführen der Schritte a) - d),
optional in Verbindung mit einem oder mehreren der verfahrensspezifischen Merkmale der vorangehenden Ansprüche.

## Claims

1. Method for controlling a heating device (12), in particular vehicle heating device, based on an actual value (I) which characterizes a temperature of a medium which is to be heated, comprising the steps:
a) obtaining a measured value (m₁) associated with the temperature of the medium which is to be heated,
b) comparing the measured value (m₁) with an actual value (I),
c) then, if the measured value (m₁) has a predetermined difference from the actual value (I), changing a counting value (A, B) by a counting-value changing amount,
d) then, if the counting value (A, B) reaches a predetermined reference counting value (S_{A}, S_{B}), changing the actual value (I) by an actual-value changing amount (d),
e) controlling the heating device (12) on the basis of the actual value (I) changed if appropriate in step d),
f) repeated execution of steps a)-e).

2. Method according to Claim 1, **characterized in that** the steps a)-e) for obtaining a sequence of measured values (m₁) are repeated according to step f) in each case after a predetermined period of time since the end of the preceding execution.

3. Method according to Claim 1 or 2, **characterized in that** if a measured value (m₁) does not have the predetermined difference from the actual value (I), a counting value (A, B) which has been changed in a preceding execution of the step c) is reset to a starting value.

4. Method according to one of Claims 1 to 3, **characterized in that** if in step c) a measured value (m₁) is greater than the actual value (I), a first counting value (A) is changed, and then, if a measured value (m₁) is smaller than the actual value (I), a second counting value (B) is changed.

5. Method according to one of Claims 1 to 4, **characterized in that** in step d) the actual value (I) is changed if in at least three consecutive executions of step c) the counting value (A, B) has been changed in each case by the counting-value changing amount and has reached the reference counting value (S_{A}, S_{B}).

6. Method according to Claim 4 or Claim 5, if it refers back to Claim 4, **characterized in that** if the first counting value (A) reaches a first reference counting value (S_{A}), the actual value (I) is increased by a first actual-value changing amount (d), and then, if the second counting value (B) reaches a second reference counting value (S_{B}), the actual value (I) is reduced by a second actual-value changing amount (d).

7. Method according to Claim 6, **characterized in that** the first actual-value changing amount (d) is identical to the second actual-value changing amount (d).

8. Method according to Claim 4 or one of Claims 5 to 7, if it refers back to Claim 4, **characterized in that** the first counting value (A) is assigned a first reference counting value (S_{A}) and the second counting value (B) is assigned a second reference counting value (S_{B}), and **in that** the first reference counting value (S_{A}) is identical to the second reference counting value (S_{B}).

9. Method according to one of Claims 1 to 8, **characterized in that** in the first execution of step b), the measured value (m₁) obtained during the first execution of step a) is used as the actual value (I).

10. Heating means, in particular for a vehicle, comprising a heating device (12) having a heat exchange arrangement (14) for transmitting heat to a medium which is to be heated, a controlling means (26) for controlling the heating device (12) and a sensor arrangement (20, 22, 24) for detecting at least one variable associated with the temperature of the medium which is to be heated, the controlling means (26) controlling the heating device (12) on the basis of the at least one variable with a method according to one of the preceding claims being carried out.

11. Method for determining an actual value (I) from a plurality of measured values (m₁) obtained consecutively, comprising the steps:
a) obtaining a measured value (m₁),
b) comparing the measured value (m₁) obtained in step a) with an actual value (I),
c) then, if the measured value (m₁) has a predetermined difference from the actual value (I), changing a counting value (A, B) by a counting-value changing amount,
d) then, if the counting value (A, B) reaches a predetermined reference counting value (S_{A}, S_{B}), changing the actual value (I) by an actual-value changing amount (d),
e) repeated execution of steps a)-d),
optionally in conjunction with one or more of the features specific to the methods of the preceding claims.

## Revendications

1. Procédé de commande d'un appareil de chauffage (12), notamment un appareil de chauffage d'un véhicule, sur la base d'une valeur réelle (I) caractérisant une température d'un fluide à réchauffer, comprenant les étapes suivantes :
a) obtention d'une valeur de mesure (mᵢ) en rapport avec la température du fluide à réchauffer,
b) comparaison de la valeur de mesure (mᵢ) avec une valeur réelle (I),
c) puis, si la valeur de mesure (mᵢ) présente une différence prédéfinie par rapport à la valeur réelle (I), modification d'une valeur de comptage (A, B) d'un degré de modification de valeur de comptage,
d) ensuite, une fois que la valeur de comptage (A, B) a atteint une valeur de comptage de référence prédéterminée (S_{A}, S_{B}), modification de la valeur réelle (I) d'un degré de modification de valeur réelle (d),
e) commande de l'appareil de chauffage (12) sur la base de la valeur réelle (I) modifiée éventuellement dans l'étape d),
f) répétition des étapes a) - e).

2. Procédé selon la revendication 1,
**caractérisé en ce que** les étapes a) - e) sont répétées pour obtenir une séquence de valeurs de mesure (mᵢ) selon l'étape f) à chaque fois après une durée prédéterminée à partir de la fin de l'opération précédente.

3. Procédé selon la revendication 1 ou 2,
**caractérisé en ce que** lorsqu'une valeur de mesure (mᵢ) ne présente pas la différence prédéterminée par rapport à la valeur réelle (I), une valeur de comptage (A, B) modifiée dans une opération précédente de l'étape c) est ramenée à une valeur de départ.

4. Procédé selon l'une quelconque des revendications 1 à 3,
**caractérisé en ce que**, si dans l'étape c), une valeur de mesure (mᵢ) est supérieure à la valeur réelle (I), une première valeur de comptage (A) est modifiée, et si une valeur de mesure (mᵢ) est inférieure à la valeur réelle (I), une deuxième valeur de comptage (B) est modifiée.

5. Procédé selon l'une quelconque des revendications 1 à 4,
**caractérisé en ce que** dans l'étape d), la valeur réelle (I) est modifiée si dans au moins trois opérations successives de l'étape c), la valeur de comptage (A, B) a été modifiée à chaque fois du degré de modification de valeur de comptage et a atteint la valeur de comptage de référence (S_{A}, S_{B}).

6. Procédé selon la revendication 4 ou la revendication 5, dans la mesure où elle se rapporte à la revendication 4,
**caractérisé en ce que** lorsque la première valeur de comptage (A) a atteint une première valeur de comptage de référence (S_{A}), la valeur réelle (I) est augmentée d'un premier degré de modification de valeur réelle (d), et lorsque la deuxième valeur de comptage (B) atteint une deuxième valeur de comptage de référence (S_{B}), la valeur réelle (I) est réduite d'un deuxième degré de modification de valeur réelle (d).

7. Procédé selon la revendication 6,
**caractérisé en ce que** le premier degré de modification de valeur réelle (d) est égal au deuxième degré de modification de valeur réelle (d).

8. Procédé selon la revendication 4, ou selon l'une quelconque des revendications 5 à 7, dans la mesure où elles se rapportent à la revendication 4,
**caractérisé en ce que** l'on associe à la première valeur de comptage (A) une première valeur de comptage de référence (S_{A}) et l'on associe à la deuxième valeur de comptage (B) une deuxième valeur de comptage de référence (S_{B}), et **en ce que** la première valeur de comptage de référence (S_{A}) est égale à la deuxième valeur de comptage de référence (S_{B}).

9. Procédé selon l'une quelconque des revendications 1 à 8,
**caractérisé en ce que** lors de la première opération de l'étape b), la valeur de mesure (mᵢ) obtenue lors de la première opération de l'étape a) est utilisée comme valeur réelle (I).

10. Dispositif de chauffage, notamment pour un véhicule, comprenant un appareil de chauffage (12) avec un agencement d'échangeur de chaleur (14) pour le transfert de chaleur à un fluide à réchauffer, un dispositif de commande (26) pour la commande de l'appareil de chauffage (12) ainsi qu'un agencement de détecteur (20, 22, 24) pour détecter au moins une valeur en rapport avec la température du fluide à réchauffer, le dispositif de commande (26) commandant l'appareil de chauffage (12) sur la base de l'au moins une valeur en mettant en oeuvre un procédé selon l'une quelconque des revendications précédentes.

11. Procédé pour déterminer une valeur réelle (I) à partir d'une pluralité de valeurs de mesure obtenues successivement (mᵢ), comprenant les étapes suivantes :
a) obtention d'une valeur de mesure (mᵢ),
b) comparaison de la valeur de mesure (mᵢ) obtenue dans l'étape a) avec une valeur réelle (I),
c) ensuite, si la valeur de mesure (mᵢ) présente une différence prédéterminée par rapport à la valeur réelle (I), modification d'une valeur de comptage (A, B) d'un degré de modification de valeur de comptage,
d) ensuite, si la valeur de comptage (A, B) atteint une valeur de comptage de référence prédéterminée (S_{A}, S_{B}), modification de la valeur réelle (I), modification de la valeur réelle (I) d'un degré de modification de valeur réelle (d),
e) répétition des étapes a) - d),
éventuellement en connexion avec une ou plusieurs des caractéristiques spécifiques du procédé des revendications précédentes.
